# EUROPÄISCHE PATENTSCHRIFT

(11) **EP 3 910 230 B1**
(45) Veröffentlichungstag und Bekanntmachung des Hinweises auf die Patenterteilung: **31.07.2024**
(21) Anmeldenummer: 20214040.6
(22) Anmeldetag: 15.12.2020
(51) Int. Cl.: F16P 3/14

(54) **ÜBERWACHUNGSEINRICHTUNG**
MONITORING DEVICE
DISPOSITIF DE SURVEILLANCE

(30) Priorität: 14.05.2020 DE 202020102721 U
(43) Veröffentlichungstag der Anmeldung: 17.11.2021
(73) Patentinhaber: Leuze electronic GmbH + Co. KG, 73277 Owen/Teck (DE)
(72) Erfinder: Feller, Bernhard, 86316 Friedberg (DE); Rohbeck, Volker, 85244 Röhrmoos (DE)
(74) Vertreter: Ruckh, Rainer Gerhard

(56) Entgegenhaltungen:
- EP-A1- 3 524 870
- WO-A1-2019/154862
- DE-A1- 102016 005 854
- DE-A1- 102016 116 828
- DE-B3- 102017 112 419
- DE-U1- 202020 101 548
- DE-U1- 29 920 715
- US-B2- 8 446 247

## Beschreibung

Die Erfindung betrifft eine Überwachungseinrichtung gemäß dem Oberbegriff des Anspruchs 1.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben, ob ein Objekt im Schutzfeld vorhanden ist oder nicht. Wird mit dem Lichtvorhang ein Objekt im Schutzfeld detektiert wird durch das entsprechende Schaltsignal eine Sicherheitsfunktion ausgelöst. Beispielsweise wird mit dem Schaltsignal eine Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtung der Fördereinrichtung dem Sicherheitssensor Mutingsensoren vorgeordnet. Wird mit den Mutingsensoren ein Objekt als zulässiges Objekt erkannt, wird der Sicherheitssensor für eine von der Objektgröße abhängige Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschrankenanordnungen gebildet. Mit derartigen Lichtschrankenanordnungen können zulässige Objekte oft nicht zuverlässig erkannt werden.

Weiterhin ist bei derartigen Überwachungseinrichtungen nachteilig, dass die dem Sicherheitssensor vorgeordneten Mutingsensoren einen erheblichen Raumbedarf beanspruchen.

Zudem ist nachteilig, dass die Abstimmung des Timings und der Auswertung der Signale der Mutingsensoren aufwändig und fehleranfällig ist, da aus den Zeitpunkten der Objektdetektionen der Mutingsensoren hochgerechnet werden muss, welche Zeitspanne vergeht, bis das zulässige Objekt tatsächlich den Sicherheitssensor passiert hat.

Die WO 2019/154862 A1 betrifft eine Überwachungseinrichtung, die einen Lichtvorhang aufweist, mit dem eine Grenzzone einer Sicherheitszone erfasst wird. Zudem ist ein Radarsensor vorgesehen, mit dem die Bewegungsrichtung von Objekten erfasst wird, die sich auf die Grenzzone zubewegen oder sich von dieser entfernen. Die Überwachungseinrichtung weist auch eine Mutingfunktion auf. Ein Muting wird dann aktiviert, wenn mit dem Radarsensor innerhalb einer Mutingzone ein sich auf die Grenzzone zubewegendes Objekt detektiert wird.

Der Erfindung liegt die Aufgabe zugrunde, eine Überwachungseinrichtung der eingangs genannten Art bereitzustellen, welche bei konstruktiv einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung bestehend aus einer Anordnung von Mutingsensoren und aus einem Sicherheitssensor, welcher zur Überwachung eines in einer Ebene verlaufenden Schutzfeldes derart ausgebildet ist, dass bei einem vom Sicherheitssensor im Schutzfeld registrierten Objekteingriff eine Sicherheitsfunktion ausgelöst wird. Bei Erfassung eines zulässigen Objekts mittels der Mutingsensoren ist der Sicherheitssensor zumindest partiell überbrückt. Die Mutingsensoren sind von in der Ebene des Schutzfeldes angeordneten Distanzsensoren gebildet. Mit den Distanzsensoren wird ein Bereich erfasst, der in der Ebene des Schutzfelds liegt.

Vorteilhaft fällt zumindest ein Teil des von den Mutingsensoren erfassten Bereichs mit zumindest einem Teil des Schutzfelds zusammen.

Die erfindungsgemäße Überwachungseinrichtung wird generell für eine Gefahrenbereichsüberwachung an einer gefahrbringenden Anlage eingesetzt. Besonders vorteilhaft wird die Überwachungseinrichtung als Zugangssicherung zu einem Gefahrenbereich eingesetzt, wobei der Zugang zum Gefahrenbereich insbesondere über eine Fördereinrichtung erfolgt.

Als zentrale Sicherheitskomponente der Überwachungseinrichtung ist ein Sicherheitssensor vorgesehen, mit dem ein in einer Ebene verlaufendes Schutzfeld überwacht wird.

Der Sicherheitssensor generiert ein binäres Schaltsignal, dessen Schaltzustände angeben, ob sich ein Objekt im Schutzfeld befindet oder nicht. Wird mit dem Sicherheitssensor ein Objekteingriff im Schutzfeld registriert, wird durch das Schaltsignal eine Sicherheitsfunktion ausgelöst, beispielsweise die Anlage stillgesetzt, sodass von dieser keine Gefahren mehr ausgehen können.

Um ein unnötiges Stillsetzen der Anlage zu vermeiden, wenn zulässige Objekte, wie zum Beispiel der Anlage zuzuführende Transportgüter, durch das Schutzfeld in den Gefahrenbereich der Anlage gefördert sollen, ist eine Mutingfunktion vorgesehen. Die Mutingfunktion sieht vor, dass dann, wenn mit den Mutingsensoren der Überwachungseinrichtung ein zulässiges Objekt erkannt wird, der Sicherheitssensor zumindest partiell überbrückt, das heißt gemutet wird, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur der Teil des Schutzfeldes überbrückt, in dem das zulässige Objekt erwartet beziehungsweise detektiert wird.

Ein wesentlicher Vorteil der erfindungsgemäßen Überwachungseinrichtung besteht darin, dass durch die Ausbildung der Mutingsensoren in Form von Distanzsensoren Objekte sehr genau vermessen werden können, sodass zulässige Objekte mit hoher Sicherheit von anderen, insbesondere sicherheitskritischen Objekten unterschieden werden können. Dies führt zu einer erhöhten Fehlersicherheit des Betriebs der Überwachungseinrichtung.

Ein weiterer wesentlicher Vorteil der Erfindung besteht darin, dass die Mutingsensoren in derselben Ebene wie das Schutzfeld orientiert sind. Die Mutingsensoren benötigen damit keinen separaten Raumbedarf für die Installation der Überwachungseinrichtung, sondern können insbesondere platzsparend im Sicherheitssensor selbst untergebracht werden.

Weiterhin ist vorteilhaft, dass damit die Mutingsensoren im Wesentlichen zeitgleich mit dem Sicherheitssensor Messwerte generieren, sodass eine zeitliche Abstimmung wie es für Mutingsensoren die beabstandet zum Sicherheitssensor liegen nötig ist, weitgehend entfallen kann.

Dies wird erfindungsgemäß dadurch erreicht, dass der mit den Mutingsensoren erfasste Bereich und das Schutzfeld in einer Ebene liegen, wobei vorteilhaft der Bereich und das Schutzfeld überlappen oder sogar identisch ausgebildet sind.

Gemäß einer vorteilhaften Ausführungsform ist der Sicherheitssensor ein optischer Sensor.

Insbesondere ist der Sicherheitssensor ein Lichtvorhang oder ein Flächendistanzsensor.

Der Begriff Lichtvorhang umfasst dabei auch Reflexions-Lichtvorhänge, Lichtgitter und auch diskrete Anordnungen von Lichtschranken oder Reflexionslichtschranken. Flächendistanzsensoren sind generell scannende Distanzsensoren, bei welchen bevorzugt Distanzmessungen nach einem Impuls-Laufzeitverfahren oder Phasenmessverfahren erfolgen. Eine Überwachung eines flächigen Schutzfeldes wird dadurch erreicht, dass vom Sender des Distanzsensors emittierte Sendelichtstrahlen über eine um eine Drehachse drehbare Ablenkeinheit abgelenkt werden. Alternativ kann der Distanzsensor in einem rotierenden Messkopf integriert sein.

Vorteilhaft sind die Distanzsensoren in Form von optischen Sensoren, Ultraschallsensoren und/oder Radarsensoren ausgebildet.

Dabei können die Distanzsensoren nach einem Puls-Laufzeit-Verfahren, einem Phasenmessverfahren oder einem Triangulationsverfahren arbeiten.

Weiter vorteilhaft ist eine Rechnereinheit zur Auswertung von Messwerten der Mutingsensoren vorgesehen.

In Abhängigkeit der Messwerte der Mutingsensoren werden in der Rechnereinheit Mutingsignale generiert, die zur Überbrückung des Sicherheitssensors verwendet werden.

Gemäß einer vorteilhaften Ausführungsform wird mit den Mutingsensoren eine zeitliche Folge von Messwerten eines durch das Schutzfeld bewegten Objektes ermittelt.

Durch die zeitaufgelöste Erfassung der Objekte können deren Strukturen sehr genau erfasst werden, sodass damit eine besonders zuverlässige Unterscheidung von zulässigen Objekten und anderen, insbesondere sicherheitskritischen Objekten möglich wird.

Besonders vorteilhaft sind Mittel zur Generierung von Geschwindigkeitssignalen von Objekten vorgesehen. Messwerte der Mutingsensoren werden abhängig von den Geschwindigkeitssignalen erfasst.

Insbesondere ist das Geschwindigkeitssignal das Fördergeschwindigkeitssignal der Fördereinrichtung ist.

Die Messwerte der Mutingsensoren in Abhängigkeit der Objekt-Geschwindigkeit liefern ein exaktes vollständiges Bild der detektierten Objekte, wodurch eine besonders genaue Identifikation von zulässigen Objekten ermöglicht wird.

Vorteilhaft werden die Geschwindigkeitssignale über eine serielle Schnittstelle oder ein Bussystem der Rechnereinheit zugeführt.

Dabei können die Geschwindigkeitssignale Analogsignale oder pulsförmige Signale sein.

Die pulsförmigen Signale enthalten in der Frequenz, in den Pulsbreiten oder in den Pulspausenverhältnissen die Information über die Geschwindigkeit.

Gemäß einer vorteilhaften Ausgestaltung werden zulässige Objekte durch mittels der Mutingsensoren ermittelte Objektmerkmale erkannt.

Insbesondere sind die Objektmerkmale von der Länge, der Breite, der Höhe und/oder der Kontur eines zulässigen Objekts gebildet.

Anhand der Objektmerkmale können zulässige Objekte zuverlässig identifiziert werden.

Die Erkennung von zulässigen Objekten kann dadurch noch weiter verbessert werden, dass mit den Mutingsensoren erfasste Objektmerkmale mit Referenzwerten verglichen werden.

Gemäß einer ersten Variante können die Referenzwerte als Parameter in der Rechnereinheit abgespeichert sein.

Alternativ können die Referenzwerte in einem Einlernvorgang eingelernt werden.

Zweckmäßig wird der Einlernvorgang mit einem Einlernkommando gestartet.

Das Einlernkommando signalisiert vorteilhaft den Zeitpunkt, ab welchem ein zulässiges Objekt durch das Schutzfeld geführt wird. Damit wird der Einlernvorgang exakt auf den Zeitraum, in welchem das zulässige Objekt das Schutzfeld passiert, abgestimmt, sodass das zulässige Objekt vollständig erfasst wird.

Prinzipiell kann der Einlernvorgang auch ohne ein Einlernkommando gestartet werden. Die Durchfahrt eines zulässigen Objekts durch das Schutzfeld wird dann anhand einzuhaltender Grenzwerte für die Messwerte der Mutingsensoren kontrolliert.

Gemäß einer vorteilhaften Ausgestaltung der Erfindung erfolgt eine Überbrückung des Sicherheitssensors, wenn Objektmerkmale eines zulässigen Objekts durch die Mutingsensoren erfasst werden.

Das Muting kann dann für eine vorgegebene Zeitdauer aufrechterhalten werden. Prinzipiell kann das Muting auch nur so lange aufrechterhalten werden, wie sich das zulässige Objekt im Schutzfeld aufhält. Dies kann mit den Mutingsensoren genau kontrolliert werden, da diese in der Ebene des Schutzfeldes angeordnet sind.

Als zusätzliche Muting Bedingung kann auch das Vorhandensein eines externen Freigabesignals gefordert sein. Dieses kann beispielsweise von der Steuerung der Fördereinrichtung generiert werden, da dort die relevanten Informationen, insbesondere zu welchen Zeiten die zulässigen Objekte dem Schutzfeld zugeführt werden bekannt sind.

In diesem Fall erfolgt zweckmäßig eine Überbrückung des Sicherheitssensors, wenn innerhalb eines vorgegebenen Zeitintervalls nach Registrieren des Freigabesignals mit den Mutingsensoren Objektmerkmale eines zulässigen Objekts erfasst werden.

Gemäß einer vorteilhaften Ausführungsform wird eine Überbrückung des Sicherheitssensors dann abgebrochen, wenn ein nicht zulässiges Objekt mit den Mutingsensoren erfasst wird.

Damit können insbesondere auch Manipulationen aufgedeckt werden. Sitzt zum Beispiel eine Person auf einer Palette mit einem Transportgut, so wird zunächst allein das Transportgut erkannt, was zur Auslösung des Muting führt. Sobald dann aber die auf dem Transportgut sitzende Person von den Mutingsensoren erfasst wird, liegt eine Fehlersituation vor, da das zulässige Objekt nicht mehr allein erfasst wird. Daher wird das Muting sofort beendet, der Sicherheitssensor wieder aktiviert. Da dieser sofort einen Obj ekteingriff registriert wird die Sicherheitsfunktion ausgelöst, wodurch die Anlage stillgesetzt wird.

Die Erfindung wird im Folgenden anhand der Zeichnungen erläutert. Es zeigen:
- Figur 1:: Beispiel einer erfindungsgemäßen Überwachungseinrichtung als Zugangssicherung zu einem Gefahrenbereich einer Anlage.

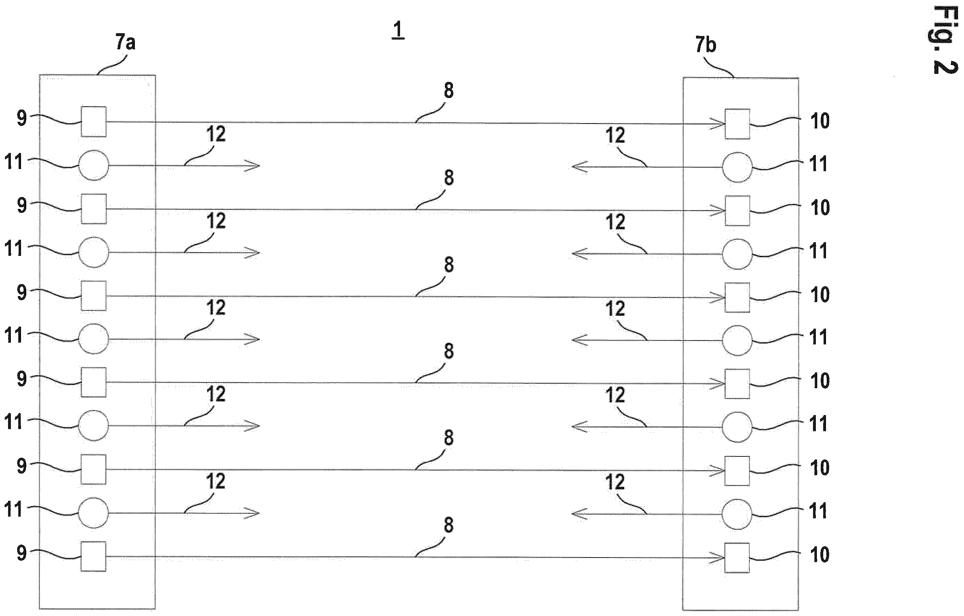

- Figur 2:: Einzeldarstellung der Überwachungseinrichtung gemäß Figur 1 in einer Seitenansicht.
- Figur 3:: Beispiel einer Erfassung eines Transportguts mit der Überwachungseinrichtung gemäß Figur 1.

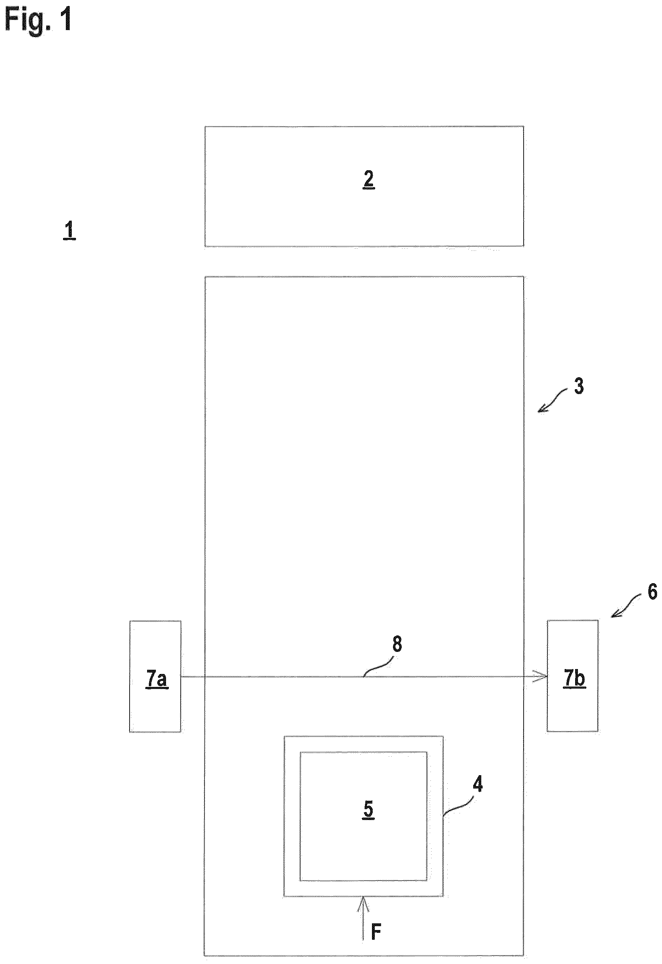

Figur 1 zeigt schematisch ein Beispiel der erfindungsgemäßen Überwachungseinrichtung 1. Die Überwachungseinrichtung 1 wird im vorliegenden Fall als Zugangssicherung für einen Gefahrenbereich an einer gefahrbringenden Anlage 2 eingesetzt. Der Zugang zum Gefahrenbereich erfolgt über eine Fördereinrichtung 3, deren Förderband in der mit F gekennzeichneten Bewegungsrichtung bewegt wird, um auf Paletten 4 angeordnete Transportgüter 5 in den Gefahrenbereich zu fördern. Natürlich können auf dieselbe Weise Transportgüter 5 aus dem Gefahrenbereich herausgeführt werden. Die Fördereinrichtung 3 kann durch seitlich angebrachte Umzäunungen geschützt werden.

Die Überwachungseinrichtung 1 umfasst einen Sicherheitssensor 6 in Form eines optischen Sensors. Dieser kann beispielsweise als Flächendistanzsensor ausgebildet sein. Im vorliegenden Fall ist der Sicherheitssensor 6 als Lichtvorhang ausgebildet.

Der Lichtvorhang weist in einem ersten Gehäuse 7a eine Reihenanordnung von Lichtstrahlen 8 emittierenden Sendern 9 und in einem zweiten Gehäuse 7b eine Reihenanordnung von Empfängern 10 auf. Die Lichtstrahlen 8 spannen ein flächiges Schutzfeld auf, das in einer vertikalen Ebene orientiert ist und damit senkrecht zur horizontalen Oberfläche des Förderbands der Fördereinrichtung 3 verläuft.

Die Sender 9 werden einzeln nacheinander zyklisch mittels einer nicht dargestellten Sendersteuerung aktiviert. Die Empfänger 10 werden in bekannter Weise optisch auf die Sender 9 synchronisiert.

Die in den Empfängern 10 generierten Empfangssignale werden in einer nicht dargestellten Auswerteeinheit zur Generierung eines binären Schaltsignals ausgewertet. Die Schaltzustände des Schaltsignals geben an, ob sich ein Objekt im Schutzfeld befindet oder nicht. Bei freiem Schutzfeld treffen die Lichtstrahlen 8 aller Sender 9 ungehindert auf den zugeordneten Empfänger 10. Bei einem Objekteingriff im Schutzfeld werden durch das Objekt die Lichtstrahlen 8 wenigstens eines Senders 9 unterbrochen. Zur Erfüllung der sicherheitstechnischen Anforderungen weist die Auswerteeinheit einen redundanten, vorzugsweise zweikanaligen Aufbau auf.

Wird mit dem Sicherheitssensor 6 ein Objekteingriff im Schutzfeld registriert, wird durch das Schaltsignal eine Sicherheitsfunktion ausgelöst, insbesondere die gefahrbringende Anlage 2 stillgesetzt.

Um ein unnötiges Stillsetzen der Anlage 2 zu vermeiden kann der Sicherheitssensor 6 in Abhängigkeit von Mutingsignalen von Mutingsensoren 11 überbrückt werden, wenn mit diesen ein zulässiges Objekt wie zum Beispiel ein auf einer Palette gelagertes Transportgut 5 erkannt wird. Durch die Überbrückung des Sicherheitssensors 6 löst dieser keine Sicherheitsfunktion aus, wenn das zulässige Objekt das Schutzfeld passiert und das Transportgut 5 kann der Anlage 2 zugeführt werden, ohne dass diese stillgesetzt wird.

Erfindungsgemäß sind als Mutingsensoren 11 Distanzsensoren vorgesehen, die in der Ebene des Schutzfelds angeordnet sind. Im vorliegenden Fall sind die Mutingsensoren 11 in den Gehäusen 7a, 7b des Lichtvorhangs integriert, was jedoch nicht zwingend der Fall ist.

Generell wird mit den Mutingsensoren ein Bereich erfasst, der in der Ebene des Schutzfelds liegt. Dabei kann dieser Bereich mit dem Schutzfeld überlappend ausgebildet sein. Damit fällt zumindest ein Teil des von den Mutingsensoren 11 erfassten Bereichs mit zumindest einem Teil des Schutzfelds zusammen.

Prinzipiell können die Distanzsensoren als Ultraschallsensoren, Radarsensoren oder dergleichen ausgebildet sein. Im vorliegenden Fall sind die Distanzsensoren als optische Sensoren, die in Form von Lichttastern derart ausgebildet sind, dass von einem Distanzsensor ermittelte Sendelichtstrahlen 12 als Empfangslichtstrahlen von einem Objekt zurück zum Distanzsensor reflektiert werden. Dabei können die Distanzsensoren nach einem Puls-Laufzeit-Verfahren, einem Phasenmessverfahren oder einem Triangulationsverfahren arbeiten.

Die Messwerte der Mutingsensoren 11 werden zur Generierung von Mutingsignalen in einer Rechnereinheit ausgewertet. Prinzipiell kann die Auswerteeinheit des Lichtvorhangs die Funktion der Rechnereinheit übernehmen. Die Mutingsensoren 11 können über serielle Schnittstellen oder ein Bussystem an die Rechnereinheit angeschlossen sein.

Zur Erfassung und Identifizierung von zulässigen Objekten mit den Mutingsensoren 11 wird eine zeitliche Folge von Messwerten eines durch das Schutzfeld bewegten Objektes ermittelt.

Hierzu sind Mittel zur Generierung von Geschwindigkeitssignalen von Objekten vorgesehen. Messwerte der Mutingsensoren 11 werden abhängig von den Geschwindigkeitssignalen erfasst.

Im vorliegenden Fall ist das Geschwindigkeitssignal das Fördergeschwindigkeitssignal der Fördereinrichtung 3.

Dabei werden die Geschwindigkeitssignale über eine serielle Schnittstelle oder ein Bussystem der Rechnereinheit zugeführt. Die Geschwindigkeitssignale sind Analogsignale oder pulsförmige Signale.

Die von den Transportgütern 5 gebildeten zulässigen Objekte werden durch mittels der Mutingsensoren ermittelten Objektmerkmale erkannt.

Dabei können die Obj ektmerkmale von der Länge, der Breite, der Höhe und/oder der Kontur eines zulässigen Objekts gebildet sind.

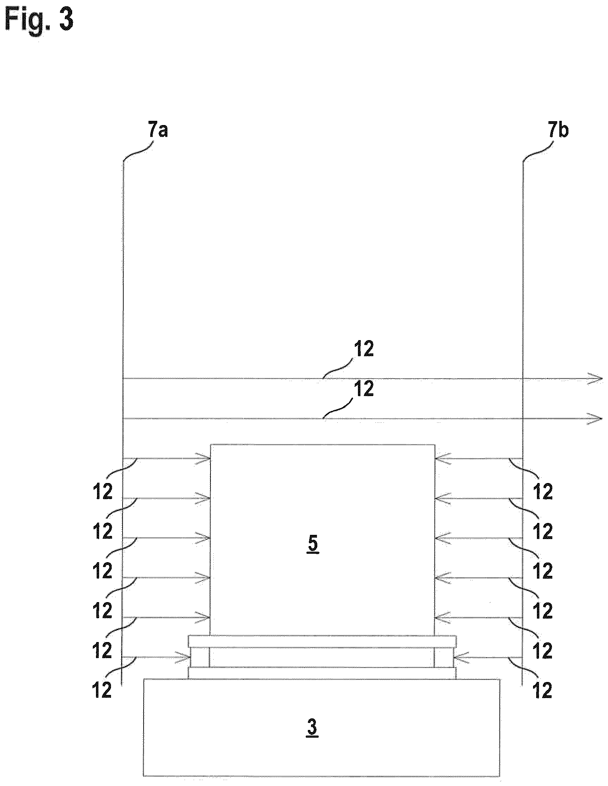

Ein Beispiel hierfür zeigt Figur 3. Wie dort dargestellt, wird mit den im ersten Gehäuse 7a angeordneten Mutingsensoren 11 die komplette linke Seitenkontur des Transportguts 5 und auch die Seitenkontur der Palette 4 erfasst. Entsprechend wird mit den im zweiten Gehäuse 7b angeordneten Mutingsensoren 11 die komplette restliche Seitenkontur des Transportguts 5 und der Palette 4 erfasst.

Mit den als Distanzsensoren ausgebildeten Mutingsensoren 11 wird während des Transports auf der Fördereinrichtung 3 das gesamte Transportgut 5 mit der kompletten Palette 4 vermessen. Dabei werden insbesondere Strukturmerkmale detektiert, wie zum Beispiel Löcher zwischen den Palettenfüßen der Palette 4. Auf diese Weise kann das Transportgut 5 eindeutig als zulässiges Objekt identifiziert werden.

Vorteilhaft werden mit den Mutingsensoren 11 erfasste Objektmerkmale mit Referenzwerten verglichen.

Dabei können die Referenzwerte als Parameter in der Rechnereinheit abgespeichert sein.

Alternativ können die Referenzwerte in einem Einlernvorgang eingelernt werden, wobei insbesondere der Einlernvorgang mit einem Einlernkommando gestartet wird.

Im einfachsten Fall erfolgt eine Überbrückung des Sicherheitssensors 6, wenn Objektmerkmale eines zulässigen Objekts durch die Mutingsensoren 11 erfasst werden.

Zusätzlich kann gefordert werden, dass eine Überbrückung des Sicherheitssensors 6 nur bei einem Vorhandensein eines externen Freigabesignals erfolgt.

In diesem Fall erfolgt eine Überbrückung des Sicherheitssensors 6, wenn innerhalb eines vorgegebenen Zeitintervalls nach Registrieren des Freigabesignals mit den Mutingsensoren 11 Objektmerkmale eines zulässigen Objekts erfasst werden.

Generell wird eine Überbrückung des Sicherheitssensors 6 dann abgebrochen, wenn ein nicht zulässiges Objekt mit den Mutingsensoren 11 erfasst wird.

Damit wird verhindert, dass außer dem zulässigen Objekt keine weiteren, gegebenenfalls sicherheitskritischen Objekte das Schutzfeld des Sicherheitssensors 6 passieren, ohne dass die Sicherheitsfunktion ausgelöst wird.

### Bezugszeichenliste

- (1): Überwachungseinrichtung
- (2): Anlage
- (3): Fördereinrichtung
- (4): Palette
- (5): Transportgut
- (6): Sicherheitssensor
- (7a): Gehäuse
- (7b): Gehäuse
- (8): Lichtstrahlen
- (9): Sender
- (10): Empfänger
- (11): Mutingsensor
- (12): Sendelichtstrahl

- F: Bewegungsrichtung

## Patentansprüche

1. Überwachungseinrichtung (1) mit einem Sicherheitssensor (6), welcher zur Überwachung eines in einer Ebene verlaufenden Schutzfeldes derart ausgebildet ist, dass bei einem vom Sicherheitssensor (6) im Schutzfeld registrierten Objekteingriff eine Sicherheitsfunktion ausgelöst wird, und mit einer Anordnung von Mutingsensoren (11), wobei bei Erfassung eines zulässigen Objekts mittels der Mutingsensoren (11) der Sicherheitssensor (6) zumindest partiell überbrückt ist, **dadurch gekennzeichnet, dass** die Mutingsensoren (11) von Distanzsensoren gebildet sind, die in der Ebene des Schutzfeldes angeordnet sind und mittels derer ein in der Ebene des Schutzfelds liegender Bereich erfasst wird.

2. Überwachungseinrichtung (1) nach Anspruch 1, **dadurch gekennzeichnet, dass** zumindest ein Teil des von den Mutingsensoren (11) erfassten Bereichs mit zumindest einem Teil des Schutzfelds zusammenfällt.

3. Überwachungseinrichtung (1) nach Anspruch 2, **dadurch gekennzeichnet, dass** der von den Mutingsensoren (11) erfasste Bereich identisch mit dem Schutzfeld ist.

4. Überwachungseinrichtung (1) nach einem der Ansprüche 1 bis 3, **dadurch gekennzeichnet, dass** der Sicherheitssensor (6) ein optischer Sensor ist.

5. Überwachungseinrichtung (1) nach Anspruch 4, **dadurch gekennzeichnet, dass** der Sicherheitssensor (6) ein Lichtvorhang oder ein Flächendistanzsensor ist.

6. Überwachungseinrichtung (1) nach einem der Ansprüche 1 bis 5, **dadurch gekennzeichnet, dass** die Distanzsensoren in Form von optischen Sensoren, Ultraschallsensoren und/oder Radarsensoren ausgebildet sind, wobei die Distanzsensoren nach einem Puls-Laufzeit-Verfahren, einem Phasenmessverfahren oder einem Triangulationsverfahren arbeiten.

7. Überwachungseinrichtung (1) nach einem der Ansprüche 1 bis 6, **dadurch gekennzeichnet, dass** zulässige Objekte auf einer Fördereinrichtung (3) durch das Schutzfeld bewegt werden.

8. Überwachungseinrichtung (1) nach einem der Ansprüche 1 bis 7, **dadurch gekennzeichnet, dass** mit den Mutingsensoren (11) eine zeitliche Folge von Messwerten eines durch das Schutzfeld bewegten Objektes ermittelt wird.

9. Überwachungseinrichtung (1) nach Anspruch 8, **dadurch gekennzeichnet, dass** Mittel zur Generierung von Geschwindigkeitssignalen von Objekten vorgesehen sind, und dass Messwerte der Mutingsensoren (11) abhängig von den Geschwindigkeitssignalen erfasst werden.

10. Überwachungseinrichtung (1) nach einem der Ansprüche 1 bis 9, **dadurch gekennzeichnet, dass** zulässige Objekte durch mittels der Mutingsensoren (11) ermittelte Objektmerkmale erkannt werden.

11. Überwachungseinrichtung (1) nach einem der Ansprüche 1 bis 10, **dadurch gekennzeichnet, dass** die Objektmerkmale von der Länge, der Breite, der Höhe und/oder der Kontur eines zulässigen Objekts gebildet sind.

12. Überwachungseinrichtung (1) nach einem der Ansprüche 10 oder 11, **dadurch gekennzeichnet, dass** mit den Mutingsensoren (11) erfasste Objektmerkmale mit Referenzwerten verglichen werden, die als Parameter abgespeichert sind oder in einem Einlernvorgang eingelernt werden.

13. Überwachungseinrichtung (1) nach einem der Ansprüche 10 bis 12, **dadurch gekennzeichnet, dass** eine Überbrückung des Sicherheitssensors (6) erfolgt, wenn Objektmerkmale eines zulässigen Objekts durch die Mutingsensoren (11) erfasst werden, und/oder wenn ein externes Freigabesignal vorhanden ist.

14. Überwachungseinrichtung (1) nach Anspruch 13, **dadurch gekennzeichnet, dass** eine Überbrückung des Sicherheitssensors (6) erfolgt, wenn innerhalb eines vorgegebenen Zeitintervalls nach Registrieren des Freigabesignals mit den Mutingsensoren (11) Objektmerkmale eines zulässigen Objekts erfasst werden.

15. Überwachungseinrichtung (1) nach einem der Ansprüche 1 bis 14, **dadurch gekennzeichnet, dass** eine Überbrückung des Sicherheitssensors (6) dann abgebrochen wird, wenn ein nicht zulässiges Objekt mit den Mutingsensoren (11) erfasst wird.

## Claims

1. A monitoring device (1) with a safety sensor (6), which is designed for monitoring a protective field running in a plane in such a way that a safety function is triggered in the event of an object intrusion registered by the safety sensor (6) in the protective field, and with an arrangement of muting sensors (11), wherein the safety sensor (6) is at least partially bridged when a permissible object is detected by means of the muting sensors (11), **characterised in that** the muting sensors (11) are formed by distance sensors which are arranged in the plane of the protective field and by means of which a region lying in the plane of the protective field is detected.

2. A monitoring device (1) according to claim 1, **characterised in that** at least a part of the area detected by the muting sensors (11) coincides with at least a part of the protective field.

3. A monitoring device (1) according to claim 2, **characterised in that** the area detected by the muting sensors (11) is identical to the protective field.

4. A monitoring device (1) according to one of claims 1 to 3, **characterised in that** the safety sensor (6) is an optical sensor.

5. A monitoring device (1) according to claim 4, **characterised in that** the safety sensor (6) is a light curtain or an area distance sensor.

6. A monitoring device (1) according to one of claims 1 to 5, **characterised in that** the distance sensors are in the form of optical sensors, ultrasonic sensors and/or radar sensors, wherein the distance sensors operate according to a pulse transit time method, a phase measurement method or a triangulation method.

7. A monitoring device (1) according to one of claims 1 to 6, **characterised in that** permissible objects are moved through the protective field on a conveyor device (3).

8. A monitoring device (1) according to one of claims 1 to 7, **characterised in that** the muting sensors (11) are used to determine a time sequence of measured values of an object moving through the protective field.

9. A monitoring device (1) according to claim 8, **characterised in that** means are provided for generating speed signals from objects, and **in that** measured values of the muting sensors (11) are detected as a function of the speed signals.

10. A monitoring device (1) according to one of claims 1 to 9, **characterised in that** permissible objects are detected by object features determined by means of the muting sensors (11).

11. A monitoring device (1) according to one of claims 1 to 10, **characterised in that** the object features are formed by the length, the width, the height and/or the contour of an admissible object.

12. A monitoring device (1) according to one of claims 10 or 11, **characterised in that** object features detected with the muting sensors (11) are compared with reference values which are stored as parameters or are taught in a teach-in process.

13. A monitoring device (1) according to one of claims 10 to 12, **characterised in that** the safety sensor (6) is bypassed when object features of a permissible object are detected by the muting sensors (11) and/or when an external enable signal is present.

14. A monitoring device (1) according to claim 13, **characterised in that** the safety sensor (6) is bypassed if object features of a permissible object are detected within a predetermined time interval after registration of the release signal with the muting sensors (11).

15. A monitoring device (1) according to one of claims 1 to 14, **characterised in that** bridging of the safety sensor (6) is aborted when a non-permissible object is detected with the muting sensors (11).

## Revendications

1. Dispositif de surveillance (1) avec un capteur de sécurité (6), conçu pour surveiller un champ de protection fonctionnant dans un plan de manière à ce qu'une fonction de sécurité soit déclenchée en cas d'intrusion d'un objet enregistrée par le capteur de sécurité (6) dans le champ de protection, et avec un agencement de capteurs d'inhibition (11), dans lequel le capteur de sécurité (6) est au moins partiellement ponté lorsqu'un objet admissible est détecté au moyen des capteurs d'inhibition (11), **caractérisé en ce que** les capteurs d'inhibition (11) sont formés par des capteurs de distance qui sont disposés dans le plan du champ de protection et au moyen desquels une région située dans le plan du champ de protection est détectée.

2. Dispositif de surveillance (1) selon la revendication 1, **caractérisé en ce qu'**au moins une partie de la zone détectée par les capteurs d'inhibition (11) coïncide avec au moins une partie du champ protecteur.

3. Dispositif de surveillance (1) selon la revendication 2, **caractérisé en ce que** la zone détectée par les capteurs d'inhibition (11) est identique au champ protecteur.

4. Dispositif de surveillance (1) selon l'une des revendications 1 à 3, **caractérisé en ce que** le capteur de sécurité (6) est un capteur optique.

5. Dispositif de surveillance (1) selon la revendication 4, **caractérisé en ce que** le capteur de sécurité (6) est une barrière immatérielle ou un capteur de distance surfacique.

6. Dispositif de surveillance (1) selon l'une des revendications 1 à 5, **caractérisé en ce que** les capteurs de distance se présentent sous la forme de capteurs optiques, de capteurs à ultrasons et/ou de capteurs radar, dans lequel les capteurs de distance fonctionnent selon une méthode de temps de transit d'impulsions, une méthode de mesure de phase ou une méthode de triangulation.

7. Dispositif de surveillance (1) selon l'une des revendications 1 à 6, **caractérisé en ce que** des objets admissibles sont déplacés à travers le champ de protection d'un dispositif de convoyeur (3).

8. Dispositif de surveillance (1) selon l'une des revendications 1 à 7, **caractérisé en ce que** les capteurs d'inhibition (11) sont utilisés pour déterminer une séquence temporelle de valeurs mesurées d'un objet se déplaçant dans le champ de protection.

9. Dispositif de surveillance (1) selon la revendication 8, **caractérisé en ce que** des moyens sont prévus pour générer des signaux de vitesse à partir d'objets, et **en ce que** les valeurs mesurées des capteurs de sourdine (11) sont détectées en fonction des signaux de vitesse.

10. Dispositif de surveillance (1) selon l'une des revendications 1 à 9, **caractérisé en ce que** les objets admissibles sont détectés par des caractéristiques d'objet déterminées au moyen des capteurs d'inhibition (11).

11. Dispositif de surveillance (1) selon l'une des revendications 1 à 10, **caractérisé en ce que** les caractéristiques de l'objet sont formées par la longueur, la largeur, la hauteur et/ou le contour d'un objet admissible.

12. Dispositif de surveillance (1) selon l'une des revendications 10 ou 11, **caractérisé en ce que** les caractéristiques de l'objet détectées par les capteurs de muting (11) sont comparées à des valeurs de référence qui sont stockées en tant que paramètres ou qui sont enseignées dans un processus d'apprentissage.

13. Dispositif de surveillance (1) selon l'une des revendications 10 à 12, **caractérisé en ce que** le capteur de sécurité (6) est contourné lorsque les caractéristiques d'un objet admissible sont détectées par les capteurs de sourdine (11) et/ou lorsqu'un signal d'activation externe est présent.

14. Dispositif de surveillance (1) selon la revendication 13, **caractérisé en ce que** le capteur de sécurité (6) est contourné si les caractéristiques d'un objet admissible sont détectées dans un intervalle de temps prédéterminé après l'enregistrement du signal de déclenchement auprès des capteurs d'inhibition (11).

15. Dispositif de surveillance (1) selon l'une des revendications 1 à 14, **caractérisé en ce que** le pontage du capteur de sécurité (6) est interrompu lorsqu'un objet non admissible est détecté avec les capteurs de sourdine (11).
